Europäisches Patentamt

**European Patent Office**

Office européen des brevets

(19)

(11) Numéro de publication: **0 006 272**
**B1**

(12) **FASCICULE DE BREVET EUROPEEN**

(45) Date de publication du fascicule du brevet: **06.01.82**

(51) Int. Cl.³: **G 01 N 27/07, E 01 C 23/07**

(21) Numéro de dépôt: **79200304.8**

(22) Date de dépôt: **13.06.79**

(54) **Procédé et dispositif pour contrôler le dosage d'un fondant chimique sur une route.**

(30) Priorité: **21.06.78 FR 7818780**
**12.01.79 FR 7900921**

(43) Date de publication de la demande:
**09.01.80 Bulletin 80/1**

(45) Mention de la délivrance du brevet:
**06.01.82 Bulletin 82/1**

(84) Etats contractants désignés:
**AT BE CH DE FR GB IT LU NL SE**

(56) Documents cités:
**FR - A - 2 061 899**

(73) Titulaire: **SOLVAY & Cie (Société Anonyme)**
**Rue du Prince Albert, 33**
**B-1050 Bruxelles (BE)**

(72) Inventeur: **della Faille d'Huysse, Gaetan**
**Avenue des Palombes 9**
**B-1150 Bruxelles (BE)**
Inventeur: **Clausse, Jacques**
**Rue Saint-Germain 43**
**B-1410 Waterloo (BE)**
Inventeur: **Boxus, Louis**
**Avenue des Hortensias 48**
**B-1940 Sint-Stevens-Woluwe (BE)**

(74) Mandataire: **Eischen, Roland**
**Solvay & Cie Département de la Propriété**
**Industrielle Rue de Ransbeek 310**
**B-1120 Bruxelles (BE)**

Courier Press, Leamington Spa, England.

Procédé et dispositif pour contrôler le dosage d'un fondant chimique sur une route

La présente invention vise à permettre de contrôler la viabilité des routes en période hivernale, plus particulièrement en période de gel ou de chute de neige.

Elle concerne plus particulièrement un procédé pour contrôler le dosage d'une quantité de fondant chimique présent sur une route.

Pour assurer la viabilité des routes en période de gel ou de chute de neige, en particulier pour leur conserver une adhérence suffisante, il est de pratique courante d'y épandre des fondants chimiques tels que, par exemple, du chlorure de métal alcalin ou alcalino-terreux, de l'urée, des alcools, etc.

Bien que ces fondants chimiques puissent être épandus sur les routes après qu'il s'y soit formé une couche glissante de givre, de verglas ou de neige en vue de la fondre, ils s'avèrent toutefois, en général, plus actifs lorsqu'ils sont épandus à titre préventif, c'est-à-dire avant qu'une telle couche glissante ait eu le temps de se former. Cette pratique présente l'avantage supplémentaire d'empêcher en permanence la formation d'une couche de verglas, de givre ou de neige sur les routes, ce qui est évidemment de nature à renforcer la sécurité des usagers.

L'épandage préventif des fondants chimiques présente toutefois l'inconvénient que ceux-ci sont progressivement éliminés des routes sous l'effet du trafic et du vent, ainsi que par ruissellement lors des précipitations de sorte qu'il s'avère nécessaire de procéder à des épandages périodiques. Il est dès lors important de pouvoir contrôler périodiquement si la quantité de fondant chimique présente par unité d'aire de la route est suffisante pour la sécurité des usagers. A cet effet, on a déjà proposé de mesurer la résistance électrique du film de fondant chimique qui recouvre la route ($H_2O$ — Tijdschrift voor watervoorziening en afvalwaterdeling, vol. 10, 24 nov. 1977, p. N96; brevet français 2 061 899).

Quoique facile et rapide, ce procédé de contrôle connu s'est révélé en pratique non fiable car incapable d'assurer une mesure précise et reproductible de la quantité de fondant présente sur la route.

La présente invention remédie à cet inconvénient de ce procédé connu, en fournissant un procédé qui permet un contrôle facile, rapide et précis de la quantité de fondant chimique présente sur une route.

L'invention concerne à cet effet un procédé pour contrôler le dosage d'un fondant chimique sur une route selon lequel on pose un manchon de section prédéterminée sur la route, on introduit dans la chambre délimitée entre le manchon et la route, une quantité réglée d'un solvant du fondant chimique, et on mesure une grandeur électrique de la couche de solution résultante.

Dans le procédé selon l'invention, on entend, par fondant chimique, une substance susceptible d'abaisser suffisamment le point de congélation de l'eau pour empêcher la formation de couches de glace, de givre ou de neige en période hivernale normale. Des fondants chimiques communément utilisés sur les routes, dans le cadre de l'invention sont les chlorures de métaux alcalins ou alcalinoterreux, à l'état particulaire ou en solutions aqueuses, par exemple le chlorure de sodium et le chlorure de calcium. On utilise avantageusement des mélanges de chlorure de sodium et de chlorure de calcium.

Le manchon a pour fonction de délimiter sur la route une surface d'aire définie. La forme de sa section n'est pas critique; elle peut être par exemple circulaire, ovale ou polygonale. Le manchon doit néanmoins être agencé de manière à assurer un contact étanche avec la route. A cet effet, il peut par exemple être muni d'une bande élastique étanche sur son bord destiné à être appliqué sur la surface de la route.

Dans le procédé selon l'invention, on choisit de préférence un solvant qui ne réagit pas avec le matériau constituant la route, par exemple avec les revêtements hydrocarbonés. On utilise de préférence des solvants peu volatils dans lesquels la dissolution du fondant chimique est rapide. Les solvants aqueux, en particulier l'eau, constituent une classe de solvants préférés dans le cadre de l'invention. Par très grand froid, il peut s'avérer nécessaire de faire usage d'un solvant à bas point de fusion, par exemple d'un mélange d'eau et d'acétone. Dans ce cas particulier, la teneur en acétone du mélange eau-acétone dépend de la température; d'une manière générale, on peut avantageusement la régler entre 5 et 25% du poids du mélange. Pour accélérer la dissolution du fondant chimique dans le solvant, on peut éventuellement chauffer celui-ci avant de l'introduire dans le manchon.

La quantité de solvant introduite dans la chambre du manchon doit être suffisante pour que toutes les aspérités de la portion de route délimitée par le manchon soient recouvertes par la solution.

Toutes autres choses égales, on obtient généralement de bons résultats dès que l'épaisseur de la couche de solution dans la chambre délimitée par le manchon est au moins égale à 1 mm, de préférence supérieure à 2 mm.

La quantité maximum de solvant à ne pas dépasser dans la chambre du manchon est conditionnée par la nécessité d'éviter une fuite de solution sous le joint du manchon, sous l'effet de la charge hydrostatique de la solution dans la chambre du manchon. Toutes autres choses égales, cette valeur maximum dépend d'un grand nombre de facteurs, parmi lesquels figurent notamment la rugosité de la route, la nature du joint du manchon, la section et la forme du manchon, la nature du solvant utilisé, notamment sa viscosité.

A titre d'exemple, des quantités de solvant qui conviennent dans le cas d'un revêtement routier hydrocarboné rugueux, sont celles qui permettent d'atteindre, dans la chambre délimitée par le manchon sur la route, une couche de solution dont l'épaisseur est comprise entre 2 et 50 mm, d'excellents résultats étant généralement obtenus avec des épaisseurs de couche comprise entre 5 et 20 mm.

Dans l'exécution du procédé selon l'invention, la grandeur électrique mesurée doit être choisie parmi celles qui sont représentatives de la concentration de la couche de solution en fondant chimique. Des exemples de grandeurs électriques adéquates sont la constante diélectrique de la solution, sa résistivité électrique, sa conductivité électrique, sa perméabilité magnétique, ses caractéristiques liées à la propagation des ondes électromagnétiques telles que ses caractéristiques d'absorption, de réfraction et de diffraction, une mesure électrique de son pH. Des grandeurs électriques particulièrement préférées sont la résistivité et la conductivité électrique.

L'invention n'exclut pas que la mesure de la grandeur électrique de la couche de solution puisse être exécutée in situ dans la chambre du manchon, pendant que celui-ci est posé sur la route. A cet effet, selon une première forme d'exécution du procédé selon l'invention, on plonge dans la couche de solution contenue dans la chambre du manchon, deux électrodes écartées l'une de l'autre d'une distance prédéterminée, et on mesure la résistance électrique de la couche de solution séparant les électrodes. On en déduit la résistivité électrique de la couche de solution contenu dans le manchon, par la relation:

$$\rho = R \times \frac{S}{l}$$

où $\rho$ désigne la résistivité de la solution;
R désigne la résistance électrique mesurée;
S désigne la surface des électrodes;
l désigne la distance séparant les deux électrodes.

En variante, on peut aussi, prélever une fraction ou la totalité de la couche de solution contenue dans la chambre du manchon et procéder ensuite à la mesure de la grandeur électrique de la solution hors du manchon. A cet effet, selon une deuxième forme d'exécution du procédé selon l'invention, on peut par exemple faire circuler la fraction de solution prélevée hors du manchon, au contact de deux électrodes et mesurer la résistance électrique de la solution entre les deux électrodes. De cette mesure, on déduit la résistivité de la solution par la relation citée ci-dessus.

Dans le procédé selon l'invention, il est préférable de soumettre la solution présente dans la chambre du manchon à une agitation mécanique pendant l'introduction du solvant dans ladite chambre, de manière à accélérer son homogénéisation. A cet effet, on peut par exemple faire usage d'agitateurs, tels que des brosses, déplacés dans le manchon.

Suivant une forme de réalisation préférée du procédé selon l'invention, pour agiter la solution, on pulvérise le solvant sous pression contre la route pendant son introduction dans le manchon.

Dans le procédé selon l'invention, la mesure de la grandeur électrique de la couche de solution de fondant chimique contenue dans la chambre du manchon est mise en relation avec la teneur en fondant chimique de cette solution; par voie de conséquence, connaissant la quantité de solvant introduite dans le manchon et l'aire délimitée par ce dernier sur la route, elle est une mesure de la quantité de fondant chimique par unité d'aire de la route.

Pour l'exécution du procédé suivant l'invention, on peut utiliser un dispositif qui, conformément à l'invention comprend un manchon conçu pour être appliqué de manière étanche sur la route, un organe pour l'introduction dans le manchon, d'un volume défini d'un solvant du fondant chimique et une cellule de mesure d'une grandeur électrique de liquides.

Dans le dispositif selon l'invention, l'organe d'introduction de solvant dans le manchon a pour fonction de débiter un volume défini, prédéterminé de solvant dans la chambre du manchon. Selon une forme d'exécution de l'invention, il peut avantageusement consister en une seringue. Celle-ci est de préférence munie d'un pulvérisateur orienté vers le fond du manchon, de manière à assurer une projection et une dispersion du solvant sur la route. Le volume utile de la seringue doit être choisi en fonction de la section du manchon, de manière que lorsque ce dernier est posé sur une route, la seringue soit capable d'y introduire un volume de solvant compatible avec la formation d'une couche de solution d'épaisseur requise, telle que définie plus haut, par exemple une couche de solution ayant une épaisseur au moins égale à 2 mm, de préférence comprise entre 5 et 50 mm. Le volume utile de la seringue doit donc être égal au volume délimité entre la paroi du manchon, son fond et un plan parallèle au fond et éloigné de ce dernier d'une distance égale à l'épaisseur requise pour la couche de solution dans le manchon.

En variante, on peut remplacer la seringue par un injecteur pneumatique ou tout autre appareil connu, capable de pulvériser et de projeter le solvant sous pression dans le manchon.

La cellule de mesure est conçue pour mesurer une grandeur électrique de la solution formée dans le manchon, après introduction du solvant et, le cas échéant, d'un réactif adéquat. Une série d'exemples de grandeurs électriques utilisables dans le cadre de l'invention a été citée plus haut.

Dans une première forme de réalisation du dispositif selon l'invention, la cellule de mesure comprend au moins deux électrodes disposées dans le manchon et raccordées à un appareil de mesure de résistance ou de conductance électrique connu en soi, tel qu'un ohmmètre ou un pont de mesure de résistance ou de conductance, par exemple un pont de Wheatstone. Les électrodes, par exemple au nombre de deux peuvent être disposées diamétralement au voisinage de la paroi du manchon. En variante, les électrodes peuvent aussi comprendre une électrode disposée axialement dans le manchon et une série d'électrodes disposées à la périphérie du manchon et raccordées entre elles.

Dans cette forme de réalisation du dispositif selon l'invention, les dimensions des électrodes et leur position dans le manchon doivent être réglées de manière qu'elles soient immergées dans la couche de solution formée dans le manchon après y avoir introduit le solvant.

Dans une seconde forme de réalisation du dispositif selon l'invention, la cellule de mesure comprend une chambre tubulaire, raccordée à un organe de transfert d'une solution du fondant chimique, du manchon dans la chambre tubulaire, ladite chambre tubulaire contenant deux électrodes raccordées à un appareil de mesure de résistance ou de conductance.

Dans cette forme de réalisation particulière de l'invention, la cellule de mesure consiste généralement, de manière connue en soi, en une enceinte contenant deux électrodes de surface définie, écartées l'une de l'autre d'une distance prédéterminée, l'appareil de mesure de résistance ou de conductance étant par exemple un ohmmètre ou à un pont de mesure tel qu'un pont de Wheatstone.

L'organe de transfert de la solution de fondant chimique dans la cellule de mesure a pour fonction essentielle d'envoyer, dans la cellule de mesure, une fraction au moins de la solution de fondant chimique formée dans la chambre délimitée par le manchon, après que celui-ci ait été posé sur une route traitée avec un fondant chimique et ait été alimenté avec un volume défini de solvant au moyen de l'organe d'introduction précité. L'organe de transfert peut consister, par exemple, en une pompe aspirante-refoulante, à fonctionnement manuel ou électrique, capable de prélever, par aspiration, la fraction susdite de solution hors du manchon et de la refouler ensuite dans la cellule de mesure.

Le dispositif selon l'invention étant conçu pour qu'une quantité égale de solvant soit introduite dans le manchon à chaque opération de dosage, il peut aisément être calibré au départ de solutions de concentrations connues en fondant chimique et afficher directement des valeurs de la quantité de fondant par unité d'aire de la route, en réponse aux mesures de la grandeur électrique.

Pour tenir compte de l'influence de la température ambiante sur la valeur de la grandeur électrique de la solution, on peut, selon une forme de réalisation avantageuse de l'invention, munir la cellule de mesure d'un organe de correction de l'influence de la température. Celui-ci peut par exemple consister en une résistance variable calibrée, manoeuvrable manuellement ou automatiquement au moyen d'un circuit électronique.

Le procédé et le dispositif suivant l'invention présentent l'avantage de permettre des dosages rapides, précis et aisés de la quantité de fondant chimique présente sur une route. Par voie de conséquence, l'invention permet à tout moment, de contrôler si un épandage supplémentaire de fondant chimique s'avère nécessaire et, le cas échéant, de calculer la quantité de fondant qu'il convient d'épandre par unité d'aire de la route.

L'invention va être explicitée au moyen des exemples d'application suivants, en référence aux dessins annexés.

La figure 1 est une représentation schématique, partiellement en section transversale verticale, d'une forme de réalisation particulière du dispositif suivant l'invention.

La figure 2 est un diagramme d'étalonnage du dispositif de la figure 1.

La figure 3 est une représentation schématique, partiellement en section transversale verticale, d'une autre forme de réalisation du dispositif selon l'invention.

La figure 4 montre, à plus grande échelle et de manière schématique, un détail du dispositif de la figure 3.

La figure 5 est une représentation schématique, partiellement en section transversale verticale, d'une troisième forme de réalisation du dispositif selon l'invention.

Dans ces figures, des mêmes notations de référence désignent des éléments identiques.

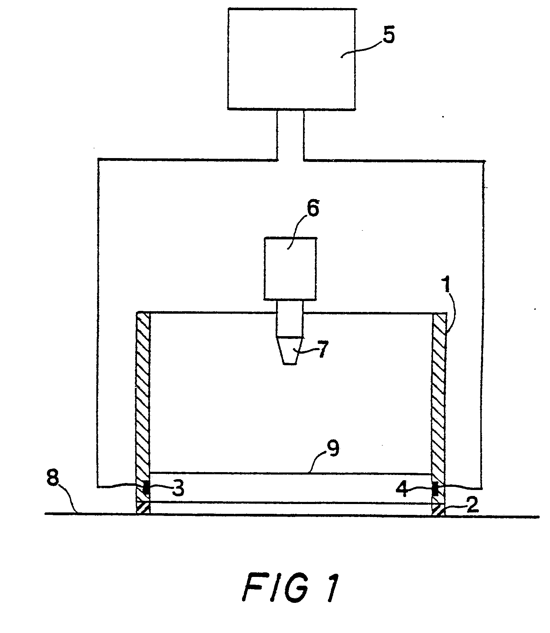

Selon l'invention, le dispositif représenté à la figure 1 comprend un manchon cylindrique rigide 1, réalisé par exemple en matière synthétique, telle que le polyfluorure de vinylidène, le polyéthylène, le polychlorure de vinyle, un polyester. Le manchon 1 est muni, sur une arête, d'un joint élastique 2, conçu pour assurer une étanchéité efficace à l'eau lorsqu'il est posé avec le manchon sur un revêtement routier. Le joint 2 peut par exemple consister en un anneau en caoutchouc collé à la périphérie du manchon ou en une bande annulaire en caoutchouc présentant une section transversale en U, dans laquelle le bord inférieur du manchon est engagé et scellé, par exemple par collage. En variante, on peut aussi utiliser, pour le joint 2, un boyau annulaire déformable élastiquement et gonflé avec de l'air ou un autre gaz. Pour renforcer l'étanchéité du joint 2, on peut avantageusement le recouvrir d'un film en un matériau hydrophobe, par exemple en silicone.

Le dispositif de la figure 1 comprend en outre une cellule conçue pour mesurer la résistivité électrique d'une solution de fondant chimique contenue dans le manchon. A cet effet, le manchon 1 est muni sur sa face interne, au voisinage du joint 2, de deux électrodes diamétralement opposées 3 et 4, raccordées à un organe de mesure de résistance 5 qui peut par exemple être un pont de mesure. Les deux électrodes 3 et 4 sont par exemple en nickel, en argent, en acier inoxydable ou en laiton.

Le dispositif de la figure 1 est en outre équipé d'un organe 6 pour l'introduction d'un volume défini d'eau sous pression dans le manchon 1. Cet organe 6 consiste par exemple en une seringue manoeuvrable manuellement. Son orifice de sortie est orienté suivant l'axe du manchon 1; il est avantageusement muni d'un pulvérisateur 7.

Pour exécuter le procédé selon l'invention au moyen du dispositif de la figure 1, on pose le manchon 1 sur la surface de la route 8 sur laquelle a été épandu un fondant chimique consistant par exemple en particules de chlorure de sodium ou de chlorure de calcium ou en un film de saumure. Le joint 2 assure l'étanchéité entre le manchon 1 et la surface de la route 8. On introduit ensuite en volume défini d'eau dans le manchon au moyen de la seringue 6. Pendant son introduction dans le manchon, l'eau est pulvérisée par le pulvérisateur 7 et projetée sur la route, ce qui accélère la dissolution du fondant chimique et assure l'obtention d'une solution homogène du fondant dans le manchon. La quantité d'eau introduite dans le manchon 1 par la seringue 6 est réglée de manière que la couche de solution 9 ainsi formée dans le manchon noie entièrement les deux électrodes 3 et 4.

Après introduction de la quantité requise d'eau dans le manchon 1, on mesure la résistance électrique de la couche de solution 9 entre les électrodes 3 et 4, au moyen du pont de mesure 5. La valeur de la résistance relevée est une mesure de la concentration de la solution de fondant chimique, et, par voie de conséquence, connaissant l'aire de la section transversale intérieure du manchon, elle est une mesure de la quantité de fondant présente par unité d'aire sur la route 8.

#### Exemple 1

On a répandu du chlorure de calcium uniformément sur une route en béton, à raison de 0,8 g de chlorure de calcium par m² de route, et on a appliqué le procédé suivant l'invention en utilisant à cet effet le dispositif représenté à la figure 1.

Le manchon 1 du dispositif présentait un diamètre intérieur égal à 9 cm et le volume utile de la seringue 6 était égal à 40 cm³.

La résistance de la couche de solution 9 entre les électrodes 3 et 4 a été égale à 3,57 kΩ.

#### Exemples 2 à 6

On a répété l'essai de l'exemple 1, avec des quantités de chlorure de calcium sur la route respectivement égales aux valeurs suivantes: 2 g/m², 2,2 g/m², 2,8 g/m², 4,1 g/m², 5,9 g/m².

Les résultats des exemples 1 à 6 ont été consignés au tableau suivant:

| Exemple (N°) | Quantité de CaCl$_2$ sur la route (g/m²) | Résistance de la couche de solution (kΩ) |
|---|---|---|
| 1 | 0,8 | 3,57 |
| 2 | 2,0 | 2,70 |
| 3 | 2,2 | 2,50 |
| 4 | 2,8 | 2,04 |
| 5 | 4,1 | 1,56 |
| 6 | 5,9 | 1,18 |

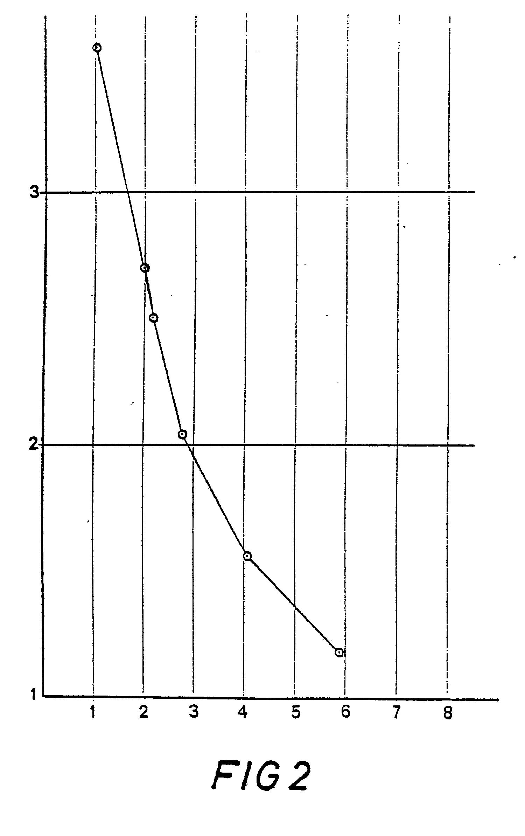

Ces résultats sont par ailleurs reproduits sur le diagramme de la figure 2, où l'échelle des abscisses reproduit la quantité de chlorure de calcium sur la route, exprimée en g/m² et l'échelle des ordonnées reproduit la valeur mesurée de la résistance de la couche de solution dans le manchon, exprimée en kΩ.

Une observation du diagramme montre qu'après étalonnage avec quelques valeurs connues de la quantité de chlorure de calcium, le dispositif et le procédé suivant l'invention sont capables de fournir une mesure précise de la quantité de chlorure de calcium, présente par unité de surface de la route. Il suffit en effet, dans chaque cas particulier, de porter sur la courbe d'étalonnage de la figure 2, la valeur mesurée de la résistance électrique, pour déterminer, sur l'échelle des abscisses, la valeur correspondante de la quantité de chlorure de calcium par m² de la route.

Des courbes d'étalonnage similaires à celles du diagramme de la figure 2 peuvent évidemment être établies pour chaque fondant chimique envisagé, tel que, par exemple, le chlorure de sodium, le chlorure de calcium, des mélanges définis de chlorure de magnésium et de chlorure de sodium, des saumures, etc.

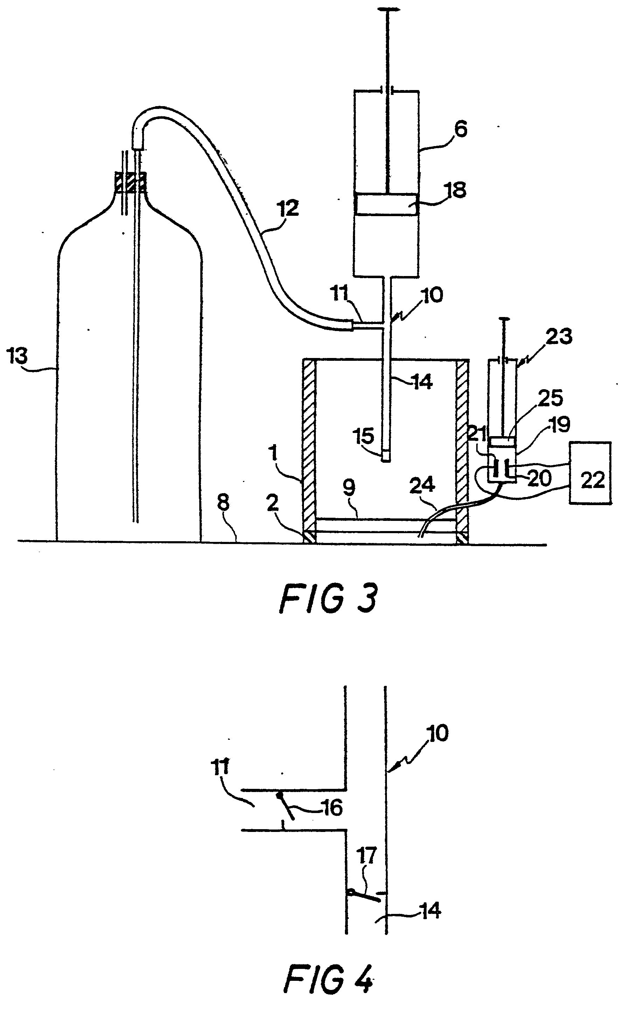

Dans la forme de réalisation représentée à la figure 3, l'organe 6 pour l'introduction d'un volume défini d'eau sous pression dans le manchon 1 comprend une seringue manoeuvrable manuellement, dont l'orifice de sortie est raccordé à un distributeur 10 à trois voies, représenté à plus grande echelle à la figure 4. La voie 11 du distributeur 10 est raccordée, via un tuyau flexible 12, à un flacon 13 destiné à contenir de l'eau, tandis que la voie 14 est prolongée à l'intérieur du manchon 1 et terminée par un pulvérisateur 15 orienté vers le fond du manchon 1.

Les voies 11 et 14 du distributeur 10 sont munies chacune d'un clapet, respectivement 16 et 17. Ceux-ci sont normalement maintenus en position fermée par des ressorts de rappel, non représentés; ils sont conçus de telle manière que, sous l'action d'un déplacement ascendant du piston 18 dans la chambre de la seringue 6, la voie 11 soit ouverte et la voie 14 obturée, tandis que sous l'action d'un déplacement descendant du piston 18, la voie 11 soit obturée et la voie 14 ouverte.

Un ressort, non représenté, peut avantageusement être prévu pour ramener automatiquement le piston 18 dans sa position supérieure extrême.

Dans le dispositif de la figure 3, la cellule de mesure de résistivité 19 est logée à l'extérieur du manchon 1 et un organe 23 est prévu pour transférer une solution liquide du manchon 1 dans la cellule 19.

La cellule 19 consiste en une enceinte tubulaire contenant deux électrodes 20 et 21 de surface bien définie, écartées l'une de l'autre d'une distance prédéterminée, par exemple 2 mm, et raccordées à un appareil de mesure de résistance électrique 22; ce dernier peut avantageusement consister en un pont de mesure, par exemple un pont de Wheatstone.

L'organe de transfert 23 consiste en une seringue disposée dans le prolongement de l'enceinte tubulaire de la cellule de mesure 19; un tuyau flexible 24, fixé à l'extrémité inférieure de l'enceinte de la cellule 19, traverse la paroi du manchon 1 et débouche au voisinage du fond de celui-ci.

Pour exécuter le procédé selon l'invention au moyen du dispositif de la figure 3, on commence par remplir le flacon 13 avec de l'eau, puis on pose le manchon 1 sur la surface de la route 8 sur laquelle a été épandu un fondant chimique consistant par exemple en particules de chlorure de sodium ou de chlorure de calcium ou en un film de saumure. Le joint élastique 2 assure l'étanchéité entre le manchon 1 et la surface de la route 8.

On manoeuvre ensuite le piston 18 de la seringue 6, pour l'amener de sa position inférieure extrême à sa position supérieure extrême et remplir ainsi la seringue d'un volume défini d'eau soutirée du flacon 13 via le tuyau 12. On repousse ensuite le piston 18 jusqu'à sa position inférieure extrême, ce qui a pour résultat de pulvériser l'eau de la seringue à travers le pulvérisateur 15, sur la portion de la route 8, circonscrite par le manchon 1. On forme ainsi sur celle-ci une couche 9 d'une solution aqueuse du fondant chimique.

On manoeuvre ensuite le piston 25 de la seringue 23, pour aspirer une fraction ou la totalité de la couche de solution 9 à travers la cellule de mesure 19, et on mesure la résistance électrique de la couche de solution entre les électrodes 20 et 21, au moyen du pont de mesure 22. La valeur de la résistance relevée est une mesure de la résistivité de la solution de fondant chimique et, par voie de conséquence, de sa concentration en fondant chimique. Connaissant l'aire de la section transversale du manchon, elle est une mesure de la quantité de fondant chimique présente par unité d'aire sur la route 8.

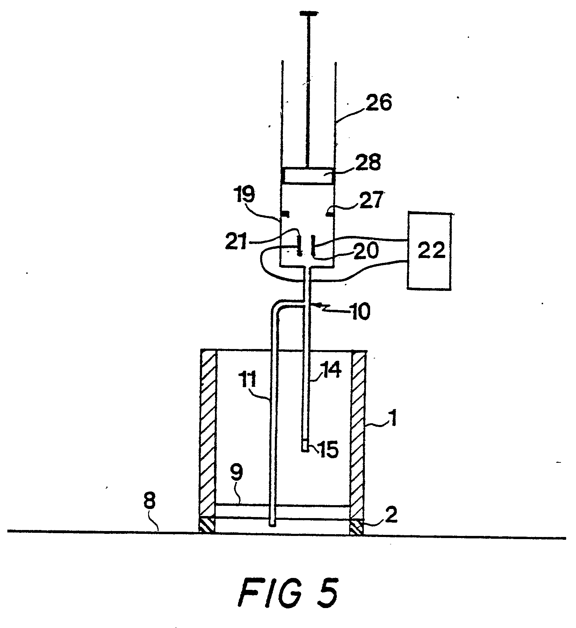

On a représenté à la figure 5 une variante d'exécution du dispositif de la figure 3. Dans celle-ci, une seringue unique 26 disposée dans le prolongement de la cellule de mesure 19, constitue à la fois l'organe d'introduction d'eau dans le manchon 1 et l'organe de transfert de la solution de fondant du manchon dans la cellule de mesure 19. Celle-ci est raccordée, à son extrémité inférieure, à un distributeur 10 à trois voies, du type de celui schématisé à la figure 4 et décrit plus haut. La voie 14 du distributeur 10 sert à l'admission de l'eau de la seringue 26 dans le manchon 1 et elle est terminée, à cet effet, par un pulvérisateur 15. La voie 11 du distributeur 10 est prolongée jusqu'au voisinage du fond du manchon 1; elle sert à transférer la solution de fondant chimique du manchon 1 dans la cellule de mesure 19.

Pour exécuter le procédé selon l'invention au moyen du dispositif de la figure 5, on extrait le piston 28 de la seringue 26 et on remplit la chambre de la seringue d'un volume défini d'eau. Les clapets 16 et 17 étant maintenus en position fermée par leurs ressorts de rappel respectifs, ils empêchent un écoulement de l'eau hors de la seringue 26.

On déplace ensuite le piston 28 vers le bas dans la seringue 26, jusqu'aux butées d'arrêt 27, ce qui a pour résultat de chasser toute l'eau de la seringue 26 dans le manchon 1, vie la voie 14 du distributeur 10. On relève ensuite le piston 28 pour aspirer la couche de solution 9 (ou une fraction de celle-ci) dans la cellule 19 et la seringue 26, via la voie 11 du distributeur 10.

## Revendications

1. Procédé pour contrôler le dosage d'un fondant chimique sur une route, caractérisé en ce qu'on pose un manchon de section prédéterminée sur la route, on introduit dans la chambre délimitée entre le manchon et la route, une quantité réglée d'un solvant du fondant chimique, et on mesure une grandeur électrique de la couche de solution résultante.

2. Procédé selon la revendication 1, caractérisé en ce qu'on règle la quantité de solvant introduite dans la chambre du manchon, de manière que la couche de solution y atteigne une épaisseur au moins égale à 2 mm.

3. Procédé selon la revendication 1 ou 2, caractérisé en ce qu'on mesure la grandeur électrique de la solution in situ dans la chambre du manchon.

4. Procédé selon la revendication 3, caractérisé en ce que pour mesurer la grandeur électrique de la couche de solution contenue dans la chambre du manchon, on y immerge au moins deux électrodes et on mesure la résistance de ladite couche de solution entre les électrodes.

5. Procédé selon la revendication 1 ou 2, caractérisé en ce que, pour mesurer la grandeur électrique de la couche de solution contenue dans la chambre du manchon, on prélève une fraction au moins de la couche de solution hors de la chambre du manchon, on fait circuler ladite fraction de solution au contact de deux électrodes et on mesure la résistance électrique de la solution entre les deux électrodes.

6. Procédé selon l'une quelconque des revendications 1 à 5, caractérisé en ce qu'on introduit le solvant dans la chambre du manchon en le pulvérisant contre la route.

7. Dispositif pour le mise en oeuvre du procédé selon le revendication 1, caractérisé en ce qu'il comprend un manchon (1) conçu pour être appliqué de manière étanche sur la route, un organe d'introduction (6, 26) dans le manchon, d'un volume défini d'un solvant du fondant chimique et une cellule de mesure (3—4, 19) d'une grandeur électrique de liquides.

8. Dispositif selon la revendication 7, caractérisé en ce que la cellule de mesure comprend au moins deux électrodes (3, 4) disposées dans le manchon (1) et raccordées à un appareil de mesure de résistance ou de conductance électrique (5).

9. Dispositif selon la revendication 7, caractérisé en ce que la cellule de mesure comprend une chambre tubulaire (19) raccordée à un organe de transfert (23, 26) d'une solution du fondant chimique, du manchon dans la chambre tubulaire, ladite chambre tubulaire contenant deux électrodes (20, 21) raccordées à un appareil de mesure de résistance ou de conductance électrique (22).

10. Dispositif suivant l'une quelconque des revendications 7 à 9, caractérisé en ce que l'organe d'introduction du solvant dans le manchon comprend une seringue (26) munie d'un pulvérisateur (15) qui est orienté vers le fond du manchon.

## Patentansprüche

1. Verfahren zur Kontrolle der Dosierung eines chemischen Schmelzmittels auf einer Straße, dadurch gekennzeichnet, daß eine Manschette vorbestimmten Querschnitts auf die Straße gestellt wird, daß in die zwischen der Manschette und der Straße begrenzte Kammer eine festgesetzte Menge eines Lösungsmittels für das chemische Schmelzmittel eingefüllt wird und daß eine elektrische Größe der Schicht der sich ergebenden Lösung gemessen wird.

2. Verfahren nach Anspruch 1, dadurch gekennzeichnet, daß die Menge des in die Kammer der Manschette eingefüllten Lösungsmittels derart festgesetzt wird, daß die Schicht der Lösung eine Dicke von mindestens 2 mm erreicht.

3. Verfahren nach Anspruch 1 oder 2, dadurch gekennzeichnet, daß die elektrische Größe der Lösung in der Kammer der Manschette an Ort und Stelle gemessen wird.

4. Verfahren nach Anspruch 3, dadurch gekennzeichnet, daß für die Messung der elektrischen Größe der Schicht der in der Kammer der Manschette enthaltenen Lösung mindestens zwei Elektroden in diese eingetaucht werden und der Widerstand der Schicht der Lösung zwischen den Elektroden gemessen wird.

5. Verfahren nach Anspruch 1 oder 2, dadurch gekennzeichnet, daß für die Messung der elektrischen Größe der Schicht der in der Kammer der Manschette enthaltenen Lösung eine Fraktion mindestens der Schicht der Lösung aus der Kammer der Manschette entnommen wird, daß die Fraktion der Lösung im Kontakt mit den Elektroden zirkulieren gelassen wird und daß der elektrische Widerstand der Lösung zwischen den beiden Elektroden gemessen wird.

6. Verfahren nach einem der Ansprüche 1 bis 5, dadurch gekennzeichnet, daß das Lösungsmittel in die Kammer der Manschette eingefüllt wird, indem es gegen die Straße zerstäubt wird.

7. Vorrichtung zur Durchführung des Verfahrens nach Anspruch 1, gekennzeichnet durch eine Manschette (1), die abgedichtet auf die Straße aufzusetzen ist, durch ein Organ (6; 26) zur Einfüllung eines bestimmten Volumens eines Lösungsmittels für das chemische Schmelzmittel in die Manschette (1) und durch eine Meßzelle; (3, 4; 19) für eine elektrische Größe von Flüssigkeiten.

8. Vorrichtung nach Anspruch 7, dadurch gekennzeichnet, daß die Meßzelle mindestens zwei Elektroden (3, 4) aufweist, die in der

**0 006 272**

Manschette (1) angeordnet und an ein Meßgerät (5) für den elektrischen Widerstand oder die elektrische Leitfähigkeit angeschlossen sind.

9. Vorrichtung nach Anspruch 7, dadurch gekennzeichnet, daß die Meßzelle eine rohrförmige Kammer (19) aufweist, die an ein Organ (23; 26) zur Übergabe einer Lösung von dem chemischen Schmelzmittel aus der Manschette (1) in die rohrförmige Kammer (19) angeschlossen ist, die zwei Elektroden (20, 21) enthält, die ihrerseits an ein Meßgerät (22) für den elektrischen Widerstand oder die elektrische Leitfähigkeit angeschlossen sind.

10. Vorrichtung nach einem der Ansprüche 7 bis 9, dadurch gekennzeichnet, daß das Organ für die Übergabe des Lösungsmittels in die Manschette (1) in einer Spritze (26) besteht, die mit einem Zerstäuber (15) ausgestattet ist, der auf den Boden der Manschette (1) ausgerichtet ist.

**Claims**

1. Process for checking the dose of a chemical deicer on a road, characterised in that a shell of predetermined cross-section is placed on the road, a set amount of a solvent for the chemical deicer is introduced into the chamber delimited between the shell and the road, and an electrical parameter of the resulting layer of solution is measured.

2. Process according to Claim 1, characterised in that the amount of solvent introduced into the chamber of the shell is set so that the layer of solution reaches a thickness equal to at least 2 mm in this chamber.

3. Process according to Claim 1 or 2, characterised in that the electrical parameter of the solution is measured in situ in the chamber of the shell.

4. Process according to Claim 3, characterised in that, to measure the electrical parameter of the layer of solution contained in the chamber of the shell, at least two electrodes are immersed in this layer of solution and the resistance of the said layer of solution between the electrodes is measured.

5. Process according to Claim 1 or 2, characterised in that, to measure the electrical parameter of the layer of solution contained in the chamber of the shell, at least a fraction of the layer of solution is removed from the chamber of the shell, the said fraction of solution is caused to circulate in contact with two electrodes, and the electrical resistance of the solution between the two electrodes is measured.

6. Process according to any one of Claims 1 to 5, characterised in that the solvent is introduced into the chamber of the shell by spraying it against the road.

7. Device for carrying out the process according to Claim 1, characterised in that it comprises a shell (1) designed to be applied to the road in a leaktight manner, a member (6, 26) for introducing, into the shell, a fixed volume of a solvent for the chemical deicer, and a cell (3—4, 19) for measuring an electrical parameter of liquids.

8. Device according to Claim 7, characterised in that the measuring cell comprises at least two electrodes (3, 4) located in the shell (1) and connected to an apparatus (5) for measuring electrical resistance or conductance.

9. Device according to Claim 7, characterised in that the measuring cell comprises a tubular chamber (19) connected to a member (23, 26) for transferring a solution of the chemical deicer from the shell into the tubular chamber, the said tubular chamber containing two electrodes (20, 21) connected to an apparatus (22) for measuring electrical resistance or conductance.

10. Device according to any one of Claims 7 to 9, characterised in that the member for introducing the solvent into the shell comprises a syringe (26) fitted with a spray nozzle (15) which is directed towards the bottom of the shell.

*FIG 1*

FIG 2

FIG 3

FIG 4

3

FIG 5